Europäisches Patentamt

European Patent Office

Office européen des brevets

(19)

(11) Veröffentlichungsnummer: **0 302 139 B1**

## (12) EUROPÄISCHE PATENTSCHRIFT

(45) Veröffentlichungstag der Patentschrift: 04.12.91

(51) Int. Cl.⁵: **F16F 1/36**, B60K 5/12

(21) Anmeldenummer: 87112900.3

(22) Anmeldetag: 03.09.87

(54) **Knickfederkörper.**

(30) Priorität: 05.08.87 EP 87111342

(43) Veröffentlichungstag der Anmeldung:
08.02.89 Patentblatt 89/06

(45) Bekanntmachung des Hinweises auf die
Patenterteilung:
04.12.91 Patentblatt 91/49

(84) Benannte Vertragsstaaten:
DE FR GB IT

(56) Entgegenhaltungen:
BE-A- 537 732          CH-A- 460 460
DE-A- 3 238 924       DE-A- 3 636 674
FR-A- 2 298 737       FR-A- 2 339 784
FR-A- 2 360 014       US-A- 2 727 738
US-A- 3 323 763

(73) Patentinhaber: WOCO Franz-Josef Wolf & Co.
Sprudelallee 19
W-6483 Bad Soden-Salmünster(DE)

(72) Erfinder: Wolf, Franz-Josef
Sprudelallee 19
W-6483 Bad Soden-Salmünster(DE)
Erfinder: Pletsch, Hubert
Am Quellenrain 13
W-6483 Bad Soden-Salmünster(DE)

(74) Vertreter: Jaeger, Klaus, Dipl.-Chem. Dr. et al
Jaeger, Steffens & Köster Patentanwälte
Pippinplatz 4a
W-8035 München-Gauting(DE)

Rank Xerox (UK) Business Services

## Beschreibung

Die Erfindung betrifft einen Knickfederkörper der im Patentanspruch 1 genannten Art.

Unter einem "Knickfederkörper" im Sinne der Erfindung wird ein Auflager oder Puffer verstanden, der aus einem Elastomerkörper besteht, der mit mindestens einer Schar von zueinander jeweils achsparallelen Kanälen durchsetzt ist, die zwischen sich Trennwände aus dem Blockelastomer stehen lassen, die mehr oder minder stark ausgeprägt im unbelasteten und unverspannten Zustand des Knickfederkörpers so weit durchgewölbt sind, daß sie unter Druckspannung eine nur unilaterale Druckverformung aufweisen und nach Überschreiten einer konstruktiv, nämlich primär durch die Wandprofilierungen, vorgegebenen kritischen Auflastmasse unter Zusammenbruch der der Auflast entgegenwirkenden Rückstellkraft einknicken. In der Federkennlinie des Federkörpers macht sich ein solcher Knickeffekt durch einen mehr oder minder abrupten Abfall der Federkraft bei zunehmender Druckverformung bemerkbar.

Knickfederkörper dieser Art sind beispielsweise in der nicht vorveröffentlichten DE 36 36 674 A1 beschrieben. Diese Knickfederkörper können als Elastomerkörper mit einem einzigen Hohlraum ausgebildet sein, der dann zumindest im wesentlichen die Konfiguration eines sanduhrartigen Doppelkegelstumpfes hat, oder können als Elastomerkörper unterschiedlicher Konfiguration ausgebildet sein, der mit meist mehreren, in einer Ebene parallel zueinander angeordneten Kanälen durchsetzt ist, von denen jeder zweite im Querschnitt in einer Ebene, in der auch der bestimmungsgemäße Auflastvektor liegt, der die Form von zwei mit ihrer kleineren Basis zusammengefügten Trapezen, im wesentlichen also ein "sanduhrartiges" Querschnittprofil aufweist.

Gummiknickfederkörper dieser Art haben sich trotz konstruktiv äußerst interessanter Kennlinien bislang in der Praxis noch kaum durchsetzen können, da sie insbesondere unter dynamischer Beanspruchung über eine nur unbefriedigende Betriebslebensdauer verfügen.

Ausgehend von diesem Stand der Technik liegt der Erfindung die Aufgabe zugrunde, einen Knickfederkörper durch konstruktive Maßnahmen hinsichtlich seiner Betriebsstandzeit zu verbessern.

Die Erfindung löst diese Aufgabe durch einen Knickfederkörper mit den im Patentanspruch 1 genannten Merkmalen.

Die Erfindung schafft also einen Knickfederkörper, genauer, einen Knickfederpuffer, der nicht nur auf der Basis eines einzigen Hohlformkörpers aufgebaut ist, sondern aus einem Elastomerformkörper besteht, der mit zumindest einer Schar von Kanälen durchsetzt ist, die zwischen sich knickfähige, unter kleinen Lasten oder zu Beginn einer dynamischen Belastung tragfähige Trennwände erzeugen. Die Querschnitte einer solchen Schar von Kanälen sind alternierend so gestaltet, daß, bezogen auf die durch die Mittellinien der Schar der Kanäle gebildeten Ebene, jedes zweite Querschnittprofil höher als breit und zwischen diesen Kanalprofilen wiederum jedes zweite Kanalquerschnittsprofil breiter als hoch bis höchstens gleich in der Höhe und Breite ist. Entscheidend ist dabei in der Profilausgestaltung jedoch, daß keines dieser Profile einen stumpfen oder spitzen Winkel aufweist, die Kanäle also keine ausgeprägten, axial verlaufenden Kanten aufweisen. Selbst wenn den Kanalquerschnitten polygonale Strukturen zugrundeliegen, so sind doch sämtliche Ecken solcher polygonalen Querschnittkonfigurationen mit weich fließenden Konturen abgerundet oder durch Hohlkehlen aufgebrochen, die mit rundem Profil, bezogen auf das Querschnittsprofil des Kanals, nach außen konkav vorspringen.

Durch die Kombination dieser Kanalsequenzen, die Anordnung der Kanalscharen in einer Ebene quer zum Auflastvektor und durch einen insgesamt ausschließlich kurvigen und an keiner Stelle winkligen Umrißprofilverlauf der Kanalquerschnitte wird ein Knickfederkörper erhalten, der nicht nur in weiten Grenzen die Beeinflussung und Veränderung der Kennlinie ermöglicht, sondern vor allem zu einer drastischen Verlängerung der Lebensdauer solcher Knickpufferelemente führt. Vergleichsversuche haben gezeigt, daß unter identischen dynamischen Belastungen die Standzeit eines Knickfederpuffers gemäß der Erfindung um fast den Faktor 10 größer war als die Standzeit eines vergleichbar konfigurierten Knickfederpuffers, der jedoch mit kantig profilierten Kanälen ausgestattet war.

Die Erfindung ist im folgenden anhand von Ausführungsbeispielen in Verbindung mit den Zeichnungen näher erläutert. Es zeigen:

Fig. 1    ein erstes Ausführungsbeispiel des Knickfederkörpers im Querschnitt senkrecht zur Längsachse der Kanäle;

Fig. 2    ein zweites Ausführungsbeispiel des Knickfederkörpers in der in Fig. 1 gezeigten Sicht; und

Fig. 3    ein drittes Ausführungsbeispiel eines Knickfederkörpers gemäß der Erfindung, ebenfalls in der in Fig. 1 gezeigten Darstellung.

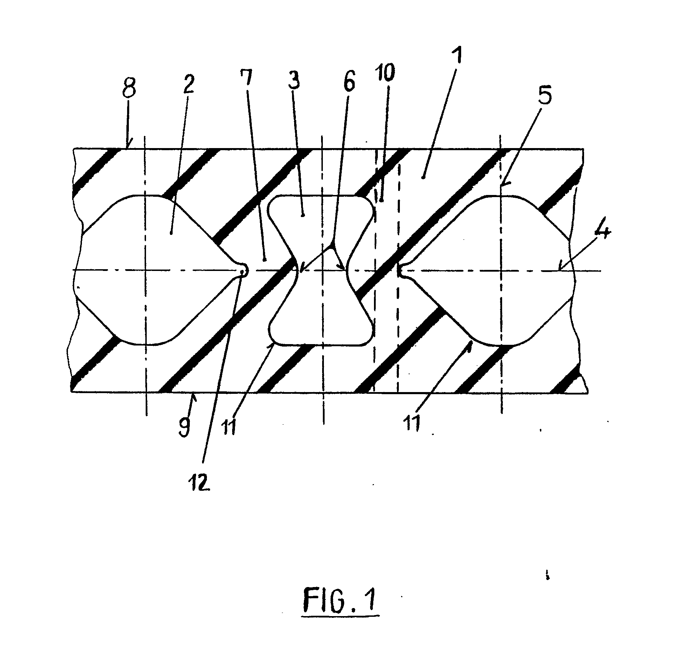

Der in Fig. 1 gezeigte Knickfederkörper besteht aus einem Elastomerkörper 1, in dem eine Schar von zueinander jeweils achsparallelen Kanälen 2,3 ausgebildet ist. Der Elastomerkörper ist in der Darstellung der Fig. 1 als Flächengebilde gezeigt. Ein solcher flächiger Elastomerkörper 1 kann als begrenzter Flächenkörper, beispielsweise als quadratische oder rechteckige oder runde Platte oder auch als kreisringförmige Platte, kann aber auch als Endlosband ausgebildet sein. Für eine Reihe anderer Anwendungen braucht der Elastomerkörper auch nicht nur als Flächengebilde gestaltet zu sein, sondern kann auch als dreidimensionaler Körper, beispielsweise als Quader oder Zylinder, ausgebildet sein, wobei dann mehrere Scharen von zueinander jeweils achsparallelen Kanälen in Ebenen übereinanderliegend angeordnet sind. Je nach Art des beabsichtigten Einsatzbereichs können dann Kanäle mit gleichen Querschnitten jeweils achsparallel übereinanderliegend, auf Lücke oder gegeneinander versetzt oder auch in der Weise angeordnet sein, daß sich die Kanäle in den verschiedenen Ebenen in der Projektion überkreuzen, ohne sich jedoch zu schneiden. Für jede dieser Anordnungen zeigen entsprechend gestaltete Elastomerkörper unterschiedliche Kennlinien, deren Verlauf im Ergebnis auch von den Materialkenndaten des Elastomers abhängt. Solche Abstimmungen vorzunehmen, ist dem Fachmann unter Verwendung der technischen Lehre der vorliegenden Offenbarung ohne weiteres möglich.

In dem in Fig. 1 dargestellten Elastomerkörper 1 ist in der gezeigten Scharebene 4 eine alternierende Folge von Kanälen 2,3 mit jeweils voneinander verschiedenen Kanalquerschnittprofilen ausgebildet, von denen der Querschnitt des einen Kanals 2 eine in der Scharebene liegende lichte Innenweite aufweist, die größer als die senkrecht zu dieser Querschnittsweite in der Richtung 5 des Auflastvektors gemessene lichte Innenquerschnittsweite ist, und von denen der Querschnitt des jeweils anderen Kanals 3 in der Richtung 5 des Auflastvektors größer als in Richtung der Scharebene 4 ist und eine in der Scharebene 4 taillierte Querschnittskonfiguration 6 aufweist. Durch diese alternierende Folge der Querschnitte der Kanäle 2,3 entstehen zwischen den aufeinanderfolgenden Kanälen einer Kanalschar Trennwände 7, die so konfiguriert sind, daß sie unter Druckspannung eine nur unilaterale Druckverformung, das heißt, daß eine Verformung bzw. ein Ausweichen der Trennwände 7 lediglich in eine einzig Richtung erfolgt, hier eine einseitig in Richtung der Scharebene 4 erfolgende Durchbiegung, aufweisen und nach Überschreiten einer konstruktiv durch die Profilgeometrie und die Materialkenndaten vorgegebenen kritischen Auflast unter Zusammenbruch der der Auflast entgegenwirkenden elastischen Rückstellkraft einknicken. Dieses Einknicken erfolgt in an sich bekannter Weise dann, wenn die Durchbiegung so weit fortgeschritten ist, daß die für eine elastische Tragfähigkeit des Elastomerblocks erforderliche senkrecht von der Auflastseite 8 zur Widerlagerseite 9 durchlaufende tragende Scheibe oder Säule 10 im Querschnitt unterbrochen wird.

Im Rahmen solcher Knickpuffer ist es nun für die Erfindung von wesentlicher Bedeutung, daß die Profile der Kanäle 2,3 an keiner Stelle irgendeinen winkligen Verlauf zeigen, sondern stattdessen umlaufend weich und fließend konturiert sind, sei dies durch ein in den Querschnitt hinein vorspringendes Abrunden 11 der von der Grundform des Kanalquerschnitts her angelegten Profilecke bzw., bezogen auf den Kanal, axialen Kante, sei dies durch die Ausbildung von Hohlkehlen 12, die, vom Kanalinneren her gesehen, konkav nach außen vorspringen. Durch solche Abrundungen 11,12 werden die bei solchen Knicklagern sonst auftretenden, unerwartet hohen Materialbeanspruchungen, die rasch zum Einreißen des Elastomerkörpers führen, aufgehoben.

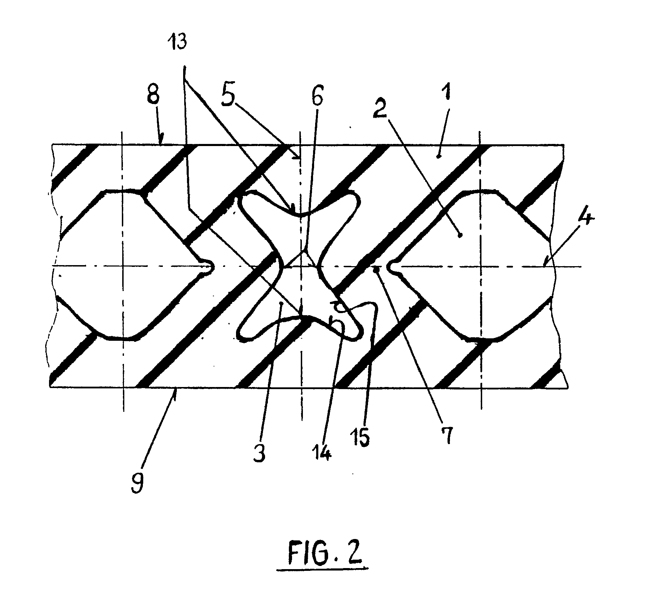

Das in der Fig. 2 gezeigte zweite Ausführungsbeispiel des Knickfederkörpers entspricht in seiner Grundstruktur dem in Fig. 1 gezeigten Ausführungsbeispiel, unterscheidet sich jedoch von diesem dadurch, daß die Kanäle 3 mit den in Richtung 5 des Auflastvektors stehenden Profilen, d.h. die Kanäle 3 mit den in der Richtung 5 des Auflastvektors längeren lichten Querschnitten als in der Richtung senkrecht dazu, nicht nur in Richtung der Scharebene 4, sondern zusätzlich auch senkrecht dazu, also in der Richtung 5 des Auflastvektors mit einer taillierten Querschnittskonfiguration 13 ausgebildet sind. Diese zusätzliche Taillierung 13 ist dabei so profiliert, daß die Flankenprofile 14,15 der Längstaillierungen 13 bzw. der Quertaillierungen 6 zumindest im wesentlichen komplementär zueinander ausgebildet sind. Eine solche Profilgestaltung stützt bei eingeknickten Trennwänden 7 alle Innenwände, d.h. das gesamte Innenprofil des Kanals 3 gegeneinander ab. Dies führt zu einem in den meisten Anwendungsfällen erwünschten relativ raschen progressiven Anstieg der Kennlinie nach dem Knickbereich und führt zum anderen vor allem zu einer weiteren spürbaren Verminderung der Spannungsbelastung des Elastomers des Elastomerkörpers 1 und damit zu einer weiteren Verbesserung der Standzeit des Knickpuffers. In diesem Zusammenhang verhindert die in Fig. 2 für den Kanal 3 gezeigte Profilgestaltung, daß nach dem Einknicken der Trennwände 7 die auf der Auflastseite 8 und der Widerlagerseite 9 verbleibenden freien Kanalräume unter weiterer faltenbildender Einknickung der Profilrandbereiche unkontrollierbar zusammengedrückt wird. Stattdessen werden diese Hohlräume durch die Taillierungen 13 in der Weise ausgefüllt, daß sich die Flanken 14 dieser Taillenkontur auf den eingeknickten Flanken 15 der Trennwände 7 abstützen, so daß sich der gesamte kollabierte Querschnitt des Kanals 3 sternförmig und mit vergleichsweise geringer Materialverspannung gegeneinander abstützt.

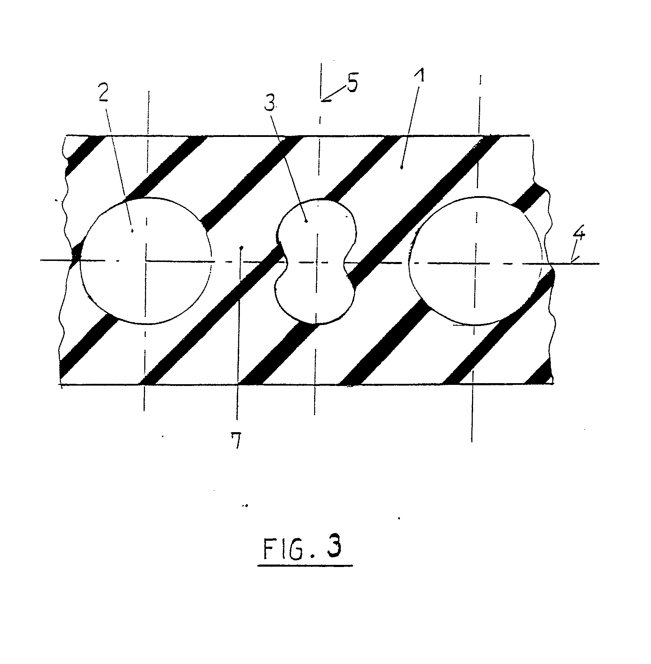

Ein drittes Ausführungsbeispiel schließlich ist in der Fig. 3 dargestellt. Dieses Ausführungsbeispiel entspricht prinzipiell den auch in den Fig. 1 und 2 gezeigten Ausführungsbeispielen, unterscheidet sich jedoch von diesen vor allem dadurch, daß die Kanäle 2 zylindrisch ausgebildet sind, also sowohl in Richtung der Scharebene 4 als auch in der Richtung 5 des Auflastvektors gleichen Durchmesser haben. Mit Knickpuffern dieser Konfiguration können Kennlinien erhalten werden, die bei erst vergleichsweise relativ hohen Kräften den Knickeffekt zeigen und überdies besonders unanfällig gegen Alterungserscheinungen und Ermüdungserscheinungen sind.

**Patentansprüche**

1. Knickfederkörper, bestehend aus einem mit mindestens einer Schar von zueinander jeweils achsparallelen Kanälen (2,3) durchsetzten Elastomerkörper (1), bei dem die zwischen zwei jeweils quer zur Richtung (5) des Auflastvektors in einer Scharebene (4) nebeneinanderliegenden Kanälen stehenden Trennwände (7) durch die Querschnitte der benachbarten Kanäle so konfiguriert sind, daß sie unter Druckspannung eine nur unilaterale Druckverformung aufweisen und nach Überschreiten einer konstruktiv vorgegebenen kritischen Auflastmasse einknicken, bei dem eine in jeweils einer quer zur Richtung (5) des Auflastvektors liegenden Scharebene (4) von Kanälen (2,3) alternierende Folge von zwei Kanalquerschnitten ausgebildet ist, von denen der Querschnitt jeweils eines ersten Kanals (2) in der Scharebene eine lichte Innenweite aufweist, die gleich oder größer als die dazu senkrecht stehende lichte Innenweite dieses Kanals (2) in Richtung (5) des Auflastvektors ist, und von denen der Querschnitt des jeweils anderen Kanals (3) in Richtung (5) des Auflastvektors eine lichte Innenweite hat, die größer als die lichte Innenweite dieses Kanals (3) in Richtung der Scharebene (4) ist und eine in der Scharebene taillierte Querschnittskonfiguration (6) aufweist, wobei die Querschnitte der Kanäle (2,3) an keiner Stelle einen winkligen Profilverlauf aufweisen.

2. Federkörper nach Anspruch 1, dadurch **gekennzeichnet,** daß die Querschnitte aller Kanäle (2;3) einer Scharebene (4) die gleiche Höhe der lichten Innenweite in Richtung (5) des Auflastvektors haben.

3. Federkörper nach einem der Ansprüche 1 oder 2, dadurch **gekennzeichnet,** daß die Kanäle (3) mit den in Richtung (5) des Auflastvektors stehenden und in Richtung der Scharebene (4) taillierten Querschnittskonfiguration (6) zusätzlich auch eine Taillierung (13) in Richtung (5) des Auflastvektors aufweisen, und zwar dergestalt, daß die Flankenprofile (14,15) der Längstaillierungen und Quertaillierungen zumindest im wesentlichen komplementär zueinander ausgebildet sind (Fig. 2).

4. Federkörper nach einem der Ansprüche 1 bis 3, dadurch **gekennzeichnet,** daß die Kanäle (2,3) im wesentlichen polygonale Querschnitte aufweisen, bei denen alle Ecken mit fließendem Konturübergang (11,12) abgerundet sind.

5. Federkörper nach Anspruch 4, dadurch **gekennzeichnet,** daß zumindest ein Teil der im Querschnitt des Kanals spitzwinkligen Kanten zumindest einer Folge von Kanälen (2) durch Hohlkehlen (12) abgerundet sind, die konkav aus dem Profil des Querschnitts des Kanals herausspringen (Fig. 1).

6. Federkörper nach Anspruch 2, **gekennzeichnet** durch eine Kanalsequenz, bei der die Kanäle einer Scharebene (4) im Querschnitt alternierend die Form eines Kreises und die Form der Umhüllenden zweier übereinanderliegender, unter Bildung einer Taille einander durchdringender Kreise haben, wobei beide Querschnitte in Richtung (5) des Auflastvektors gleich hoch sind (Fig. 3).

7. Federkörper nach den Ansprüchen 4 und 5, **gekennzeichnet** durch eine Kanalsequenz, bei der die Kanäle einer Scharebene (4) im Querschnitt alternierend (a) zumindest im wesentlichen in der Umhüllenden die Form einer liegenden Zitrone mit beidseitig ausgeprägter Blütenspitze und (b) die Form des Axialschnitts einer Sanduhr mit breiter offener Taille, flachen Kopf- und Fußabschlüssen und stark ausgeprägten Abrundungen an allen Ecken haben, und wobei alle Querschnitte in Richtung (5) des Auflastvektors gleich hoch sind (Fig. 1).

8. Federkörper nach Anspruch 3, **gekennzeichnet** durch eine Kanalsequenz, bei der die Kanalquerschnitte im Querschnitt alternierend (a) zumindest im wesentlichen die Form einer stehenden Raute mit abgeschnittenen Kopf- und Fußspitzen und nach außen gerundet herausspringenden rechten und linken Seitenecken und (b) die Form eines in allen Ecken stark gerundeten "X" haben, wobei die Höhen aller Querschnitte in Richtung (5) des Auflastvektors gleich sind (Fig. 2).

9. Verwendung des Federkörpers nach einem der Ansprüche 1 bis 8 als Anschlagpuffer, insbesondere zur Federwegbegrenzung.

## Claims

1. A spring element having a kinking effect comprising an elastomer body (1), interspersed by at least one group of mutually parallel channels (2,3), wherein the walls (7) separating the channels located between two adjacent channels lying transversely to the respective direction (5) of the load vector in one group plane (4) are configured by the cross sections of adjacent channels such that they perform only a unilateral deformation by compression under compressive load and kink when surpassing a predetermined critical load, wherein in one group plane (4) of channels (2,3) orientated transversely to the direction of the load vector an alternating sequence of two channel cross sections is formed, wherein the cross section of a respective first channel (2) comprises an inner width with respect to the group plane being equal or larger than the inner width of this channel (2) in the direction (5) of the load vector being perpendicular to the group plane, and wherein the cross section of the respective second channel (3) in the direction (5) of the load vector comprises an inner width larger than the inner width of this channel (3) in the direction of the group plane (4) and shows a reduced cross section configuration (6) within the group plane, whereby the cross sections of the channels (2,3) do not comprise any angular profiled area.

2. A spring element according to claim 1, **characterized** in that the cross sections of all channels (2;3) of one group plane (4) comprise the same height of the inner width in the direction (5) of the load vector.

3. A spring element according to one of the claims 1 or 2, **characterized** in that the channels (3) comprising the cross section configuration (6) orientated in the direction (5) of the load vector and reduced in the direction of the group plane (4) comprise an additional reduction (13) in the direction (5) of the load vector, such that the flank profiles (14,15) of the longitudinal reductions and transversal reductions are formed at least essentially complementarily to each other (fig. 2).

4. A spring element according to one of the claims 1 to 3, **characterized** in that the channels (2,3) comprise essentially polygonal cross sections, wherein all corners are rounded off with a gradually changing contour (11,12).

5. A spring element according to claim 4, **characterized** in that at least one part of the acute-angled edges in the cross section of the channel of at least a sequence of channels (2) is rounded off by grooves (12) concavely projecting from the cross section of the channel (fig. 1).

6. A spring element according to claim 2, **characterized** by a sequence of channels, wherein the channels of a group plane (4) alternatingly comprise a cross section formed like a circle and formed like the envelope of two circles lying on top of each other, respectively, whereby forming a reduction of two circles penetrating each other, such that both cross sections comprise the same height in the direction (5) of the load vector (fig. 3).

7. A spring element according to claims 4 and 5, **characterized** by a channel sequence, wherein the channels of a group plane (4) alternatingly comprise a cross section shaped (a) at least essentially like the envelope of a lying lemon with a blossom top on both sides and (b) like the axial cross section of an hour glass with wide, open reduction, flat top and bottom ends and strongly rounded areas at all corners, and whereby all cross sections comprise the same height (fig. 1) in the direction (5) of the load vector.

8. A spring element according to claim 3, **characterized** by a channel sequence, wherein the cross sections of the channels comprise alternatingly (a) at least essentially the form of a standing rhombus with cut off top and bottom tips and right and left rounded lateral corners projecting outwardly and (b) the form of an "X" strongly rounded at all corners, wherein the heights of all cross sections in the direction (5) of the load vector are equal (fig. 2).

9. Use of a spring element according to one of the claims 1 to 8 as an end stop buffer in particular for limiting the spring-deflection path.

## Revendications

1. Elément ressort, du type à flexion, constitué d'un corps élastomère (1), traversé par au moins une famille de canaux (2, 3), chacun à axes parallèles entre eux. pour lequel les parois formant séparations (7), situées entre deux canaux placés côte à côte dans le plan (4) de la famille concernée, chacun perpendiculairement à la direction (5) du vecteur représentant la charge, ont une configuration due à la section des canaux voisins, telle qu'elles présentent, lorsqu'elles sont soumises à compression, seulement une déformation unilatérale à la pression, et qu'elles s'écrasent après dépassement d'une valeur critique de la charge, donnée par construction, élément ressort pour le quel est réalisée une suite de deux sections de canaux, présentant alternativement des plans (4), de la famille de canaux (2, 3), disposés chacun perpendiculairement à la direction du vecteur représentant la charge, étant entendu que, de ces sections, celle de chaque premier canal (2) présente, dans le plan de la famille, une ouverture intérieure libre égale ou supérieure à l'ouverture intérieure libre, perpendiculaire à elle, de ce canal (2) dans la direction (5) du vecteur représentant la charge, et que, de ces sections, celle de chaque second canal (3) a, dans la direction (5) du vecteur représentant la charge, une ouverture intérieure libre qui est plus grand6e que l'ouverture intérieure libre de ce canal (3) dans la direction du plan (4) de la famille et qui présente une configuration de la section comportant un rétrécissement (6) dans le plan (4) de la famille, les sections des canaux (2, 3) ne présentant, en aucun endroit, un tracé anguleux de leur profil.

2. Elément ressort suivant la revendication 1, caractérisé en ce que les sections de tous les canaux (2, 3) d'un plan (4) de la famille concernée ont, dans la direction (5) de la charge, la même hauteur pour l'ouverture intérieure libre.

3. Elément ressort suivant la revendication 1 ou la revendication 2, caractérisé en ce que les canaux (3), comportant la section ayant la configuration (6) comportant un rétrécissement dans le plan (4) de la famille, présentent, de plus, également un rétrécissement (13) dans la direction (5) du vecteur représentant la charge, et cela de telle façon que les profils des flancs (14, 15) des zones comportant un rétrécissement dans le sens de la longueur et celles comportant un rétrécissement dans le sens transversal ont essentiellement une forme au moins complémentaire.

4. Elément ressort suivant l'une quelconque des revendications 1 à 3, caractérisé en ce que les canaux (2, 3) présentent essentiellement des sections polygonales pour lesquelles tous les coins sont arrondis, avec une zone de transition continue (11, 12) du périmètre.

5. Elément ressort suivant la revendication 4, caractérisé en ce qu'au moins une partie des arêtes à angle aigu, dans la section du canal, d'au moins une suite de canaux (2, 3) est arrondie par des congés creux (12), formant des évidements concaves du profil de la section du canal.

6. Elément ressort suivant la revendication 2, caractérisé par une séquence de canaux pour laquelle les canaux d'une plan (4) d'une famille ont, en section, alternativement la forme d'un cercle et la forme enveloppant deux cercles placés l'un au dessus de l'autre et s'interpénétrant en formant un rétrécissement, ces deux sections ayant la même hauteur dans la direction (5) du vecteur représentant la charge (figure 3).

7. Elément ressort suivant la revendication 4 et la revendication 5, caractérisé par une séquence de canaux pour laquelle les canaux d'un plan (4) d'une famille ont, en section, alternativement (a) au moins essentiellement, pour enveloppe, la forme d'un citron couché comportant des efflorescences saillantes des deux côtés, et (b) la forme de la secticn axiale d'un sablier comportant un rétrécissement largement ouvert, des extrémités plates en tête et en pied et des arrondis fortement marqués sur tous les points anguleux, et pour laquelle toutes les sections ont la même hauteur dans la direction (5) du vecteur représentant la charge (figure 1).

8. Elément ressort suivant la revendication 3, caractérisé par une succession de canaux pour laquelle les sections des canaux ont, en section, alternativement (a) au moins essentiellement la forme d'un losange dressé, comportant des pointes en tête et en pied coupées, et des coins latéraux, droite et gauche, saillants vers l'extérieur arrondis, et (b) la forme d'un "X", fortement arrondi à tous ses points anguleux, les hauteurs de toutes les sections étant les même dans la direction (5) du vecteur représentant la charge (figure 2).

9. Utilisation de l'élément ressort suivant l'une quelconque des revendications 1 à 8, sous la forme d'un tampon de butée, en particulier comme limiteur élastique de course.

FIG. 1

FIG. 2

FIG. 3